# EUROPEAN PATENT SPECIFICATION

(11) **EP 4 436 512 B1**
(45) Date of publication and mention of the grant of the patent: **19.11.2025**
(21) Application number: 23707178.2
(22) Date of filing: 13.02.2023
(51) Int. Cl.: A61C 8/00, A61C 13/107, A61C 13/00

(54) **METHOD FOR MANUFACTURING BAR ELEMENTS OF A TEMPORARY DENTAL PROSTHESIS**
VERFAHREN ZUR HERSTELLUNG VON STABELEMENTEN EINER TEMPORÄREN ZAHNPROTHESE
PROCÉDÉ DE FABRICATION D'ÉLÉMENTS DE BARRE D'UNE PROTHÈSE DENTAIRE TEMPORAIRE

(43) Date of publication of application: 02.10.2024
(73) Proprietor: Shtager, Oleksiy Oleksandrovych, 61145 Kharkiv (UA); Dziuba, Mykhailo Volodymyrovych, 83114 Donetsk (UA)
(72) Inventor: Shtager, Oleksiy Oleksandrovych, 61145 Kharkiv (UA); Dziuba, Mykhailo Volodymyrovych, 83114 Donetsk (UA)
(74) Representative: Lapienis, Juozas
(86) International application number: PCT/IB2023/051287
(87) International publication number: WO 2024/170927

(56) References cited:
- US-A1- 2010 183 998
- US-A1- 2022 054 238

## Description

The invention relates to the field of dentistry, in particular to a method for manufacturing bar elements of a temporary dental prosthesis on implants for a patient in the complete or partial absence of teeth of the jaw.

A document in the art is exemplified by US 2010/183998 A1.

Generally, there is a reinforcing element, namely a bar structure, or, in other words, a bar, inside a prosthesis manufactured for a patient in the complete absence of teeth of the jaw. It is used in all areas of the prosthesis that rest on implants (also known as implant fixtures, transplants), whether that be permanent or temporary prostheses.

According to the protocol, on newly installed implants, the dental structure can be fixed no later than after five to seven days (depending on the authors of the technique). During this time the following operations are usually performed.

A dental practitioner takes impressions or cast models (physical, i.e. using an impression compound, or virtual), which he then sends to a dental laboratory, from the implants or implant multi-units (i.e. universal abutments used for prosthetics on implants).

In the dental laboratory, a dental technician makes an individual impression tray and then passes it to the dental practitioner.

By means of said impression tray, the dental practitioner takes a more accurate impression from the same implants or multi-units, which is called a working cast model, with individually prepared impression transfers (adapters that allow the dental technician in the dental laboratory to determine the exact location of the implants in the jaw). Said repeated manipulations with the cast model from the same multi-units are necessary to reduce the amount of the impression compound and, thus, reduce its shrinkage, which increases the accuracy of manufacturing a future bar. The dental practitioner then sends said working cast model back to the dental laboratory.

In the dental laboratory, the dental technician makes a structure, for example, in the form of wax rims, which will allow to determine the individual functional and aesthetic parameters of future teeth, in particular, the vertical dimension of occlusion and the centric relation of jaws. Said rims are passed to the dental practitioner, after which the latter takes measurements in the dental chair. It should be noted that the measurements should be made with high accuracy, since said individually made wax rims will be a guide for the dental technician in the manufacture of a future prosthesis. Afterwards, the dental practitioner passes the wax rims to the dental laboratory.

In the dental laboratory, the obtained rims are fixed in an articulator, which is a device that imitates individual chewing movements of a patient. And it is only in this step that a one-piece bar template is obtained (the bar can be designed on a computer (virtual modelling) or using wax by a dental technician (method of making a replica)). Based on said template, the bar itself is made from dental titanium or other metals. Various methods of manufacturing can be used, for example, the milling method, the method of selective laser sintering or metal casting in special foundry laboratories.

The manufactured bar is passed to a dental practitioner at a clinic for fitting and determining precision of fit of the bar to the multi-units, as well as passivity of seating of the bar on the multi-units.

The dental practitioner determines precision of fit by means of dental magnifying optics and x-rays after screwing the bar to the implant multi-units. The gaps between the multi-units and the bar should not exceed 5-10 µm (depending on the manufacturer) to avoid development of infection in the area of connection of the bar with the multi-units and to prevent development of inflammation on the mucosa and in the bone, which, in turn, contributes to the long service life of the future prosthesis.

Passivity of seating of the bar is that the bar must "be seated" accurately and without effort on all multi-units at the same time and is determined by the Sheffield test. Passivity is a mandatory criterion showing the absence of tension of "pulling" of the implants or pressure sideways. If there is pressure on the implants or side load on the implant, then there will be no passivity and there will be bone destruction in the zone of pressure transfer from the bar to the implant, followed by the falling out of the implant.

It should be emphasized that it is difficult to achieve compliance with said criteria even if a surgeon uses a surgical navigation template, by means of which the surgeon installs the implants into the bone during the implantation operation in the same way as it was modelled in the program. This is due to the fact that during the installation of the implant through the holes in the navigation template, the bone tissue is sequentially drilled with special cutters, after which the implant is fixed in the implant site. However, due to the fact that there is always a microspace between the hole in the template and the implant driver, into which the implant is installed through the hole in the template, the cutter always has a so-called deviation at its tip, i.e. deviates from the axis set in the program, while it is obvious that the longer the implant, the greater said deviation will be.

After confirmation of compliance with the necessary criteria, the bar is passed to the laboratory for fixing teeth on it, afterwards the obtained prosthesis is passed from the laboratory to the dental practitioner, who, in turn, fastens it to the multi-units by means of screws.

This protocol is the gold standard for manufacture of implant-supported bridges, however, as follows from the above, it is characterized by significant drawbacks: firstly, it requires joint precise work of a dental practitioner and dental technicians with relevant experience and qualifications, among other things, to achieve precision of fit of the bar to the multi-units and passivity of seating of the bar on them, secondly, it is extended in time (even taking into account the use of virtual modelling methods at all possible steps described above), during which the patient has to visit the clinic several times and wear implants without a bridge, experiencing associated physical and psychological discomfort.

US Patent Application No. 2010209874 published on 19.08.2010 discloses a set of elements for obtaining a dental prosthesis bar therefrom. Separate elements can be mechanically connected to form a single structure such that they cannot accidentally detach, but at the same time remain movable relative to each other, which facilitates adaptation to the individual conditions of the patient's oral cavity. With all the advantages described above, the mobility of the elements of the assembled bar and the need to move it to the position corresponding to the position of the implants determine the relative complexity of its installation, in addition, each of the elements forming it is characterized by a complex shape, which, in turn, complicates the process of their manufacture.

Thus, the objective of the present invention is to develop methods for manufacturing bar elements of a temporary dental prosthesis which eliminate the above-described disadvantages of the prior art and therefore ensure the achievement of the technical result consisting in minimizing the human resources required for the manufacture of the prosthesis, as well as the time of its manufacture and installation.

The objective is solved by developing a method for manufacturing bar elements of a temporary dental prosthesis, each of which comprises a section of attachment to the implant and at least one side section extending from the section of attachment, wherein said method comprises the steps of obtaining three-dimensional scanning data and x-ray data of at least a part of the oral cavity of the patient; obtaining a three-dimensional model of the patient's dento-facial system by virtual matching of three-dimensional scanning data with x-ray data; obtaining a model of teeth and a model of implant placement by virtual modelling of teeth and virtual modelling of implant placement in the jawbone using the three-dimensional model of the patient's dento-facial system; obtaining a bar model by virtual bar modelling using the three-dimensional model of the patient's dento-facial system, the model of implant placement and the model of teeth; obtaining bar elements using the obtained bar model, wherein the at least one side section extending from the section of attachment is intended for welding to the adjacent side section of an adjacent element.

In addition, the objective is solved by developing a method for manufacturing a temporary dental prosthesis on implants, where the dental prosthesis comprises teeth and a bar, comprising the manufacture of teeth and bar elements of the dental prosthesis, each of which comprises a section of attachment to the implant and at least one side section extending from the section of attachment, wherein said method, after the step of manufacturing bar elements, comprises the steps of installing said elements by means of the sections of attachment to the implant on the corresponding implants in the patient's jawbone; connecting the adjacent side sections of the bar elements by intraoral welding to obtain a bar and installing teeth on the obtained bar; wherein the step of manufacturing bar elements involves obtaining three-dimensional scanning data and x-ray data of at least a part of the oral cavity of the patient; obtaining a three-dimensional model of the patient's dento-facial system by virtual matching of three-dimensional scanning data with x-ray data; obtaining a model of teeth and a model of implant placement by virtual modelling of teeth and virtual modelling of implant placement in the jawbone using the three-dimensional model of the patient's dento-facial system; obtaining a bar model by virtual bar modelling using the three-dimensional model of the patient's dento-facial system, the model of implant placement and the model of teeth; obtaining bar elements using the obtained bar model.

Thus, when employing the claimed methods for manufacturing bar elements of a temporary dental prosthesis and the temporary dental prosthesis itself, the steps at which the dental laboratory is involved, described in the "Prior Art" section, can be completely excluded, and it is also possible to manufacture and install the prosthesis for a patient on the day of implantation. The dental practitioner employs virtual modelling methods by means of appropriate software based on three-dimensional scanning data and x-ray data. He can collect all the data about the future installation of implants, place these implants virtually in said programs, model a surgical navigation template, teeth and a bar, manufacture them on a 3D-printer or on a milling machine before surgery.

In contrast to the methods for manufacturing prostheses known from the prior art, the claimed method is characterized by assembling the elements to form a one-piece bar directly in the patient's mouth by intraoral welding and installing teeth on the obtained bar, for example, using auto-polymer resin or composite cement, immediately after obtaining the bar. In other words, the claimed method for manufacturing and installation are inseparable. Such an approach ensures compliance of the obtained bar with the above-described mandatory criteria, since each of the bar elements is seated on its multi-unit freely, accurately and without effort, compensating for microerrors, after which it is welded with its side section to the adjacent side section of another element, ensuring a free seating of the one-piece bar obtained after welding on all multi-units at the same time. After obtaining a one-piece bar, the latter can, for example, be unscrewed from the multi-units and installed back on them with the same accuracy and passivity, i.e. without tension and side pressure on the implants.

Thus, the time for manufacturing the prosthesis, as well as the resources of qualified personnel are substantially reduced: performance of the steps of the method is available even for novice dental practitioners.

Obviously, the installation of implants with multi-units itself is performed after obtaining a model of their placement. This step does not relate directly to the method for manufacturing a dental prosthesis, therefore it is not described in the implementations of the claimed method.

As stated above, each of the bar elements comprises a section of attachment to the implant multi-unit and at least one side section extending from the section of attachment. The number of bar elements is determined by the number of implants (the average number of which is usually 4, but can be either less or more), the "internal" bar elements each comprise two side sections extending in different sides, while the external ones can be characterized by the presence of both one side section for connection with the internal element (in this case, the section of attachment to the implant of said element will be located at the edge of the assembled bar) and two side sections (in this case, one side section is intended for connection with the internal element of the bar, in particular, with its adjacent side section, and the second one is free, and its end will be located at the edge of the assembled bar). The specific design depends on the individual characteristics of the patient.

Obtaining three-dimensional scanning data can be a three-dimensional scanning process the result of which are corresponding three-dimensional scanning data, and can also be extraction of three-dimensional scanning data from a digital file on a computer. Three-dimensional scanning data can be obtained during the modelling or manufacturing process and at the site of modelling or manufacturing, or independently of the modelling process. In addition, modelling and manufacturing can be performed in the same physical location or in different physical locations.

Obviously, in order to minimize time costs, modelling and manufacturing are preferably performed in the same physical location.

Most preferably, at the step of obtaining bar elements of the dental prosthesis, adjacent surfaces of the side sections are provided which at least partially do not lie in the plane of their imaginary cross section, i.e., which lie "in the overlapping manner". This is due to the use of intraoral welding, which cannot be performed for welding the surfaces lying in the planes of the cross section of the bar.

Most preferably, at the step of obtaining bar elements, a bar blank is manufactured using the obtained bar model, and the bar blank is divided into elements. As stated above in the description section "Prior Art", various methods for manufacturing can be used for this purpose, for example, the milling method, the method of selective laser sintering or metal casting.

Before dividing the bar blank into elements, the most advisable is to perform virtual modelling of division sections. Such approach is the fastest, most accurate and most simple. Yet, an option of manually dividing the bar without modelling division sections is not excluded. In any of said options, the adjacent surfaces of the side sections of the bar elements (in this case, the surfaces formed after division) must comply with the above requirements.

An embodiment is also possible, according to which virtual modelling of bar elements using the obtained bar model and obtaining each of bar elements separately using the models of bar elements are performed at the step of obtaining bar elements. Thus, this option does not involve the step of manufacturing a bar blank, as in the above-described embodiment comprising division.

It should be noted that a model of teeth is preferably obtained before obtaining a model of implant placement, wherein the model of teeth is additionally used at the step of obtaining a model of implant placement.

Yet, an option is also possible, where a model of teeth is obtained after obtaining a model of implant placement.

The claimed method will be described now in more detail with reference to the following drawings.
Fig. 1 and 2 are a general view and a top view of a bar blank of a dental prosthesis, divided into elements;
Fig. 3-6 are general views of the bar elements of Fig. 1 and 2;
Fig. 7 is a top view of an example of the bar elements installed on multi-units before welding;
Fig. 8 is a general view of the manufactured prosthesis.

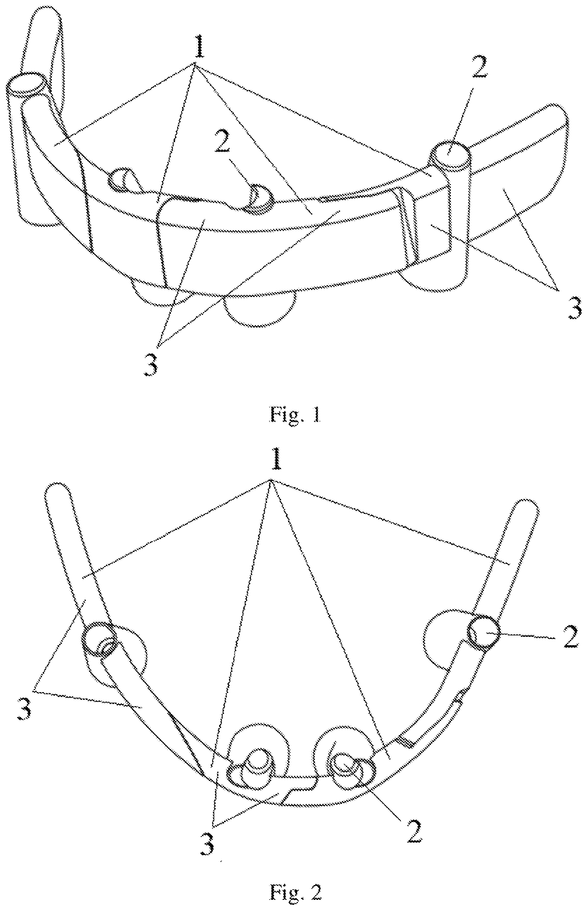

Fig. 1 and 2 illustrate a general view and a top view of a bar blank of a dental prosthesis, divided into elements 1. Each of said elements 1 comprises a section 2 of attachment to the implant and two side sections 3 extending from the section 2 of attachment.

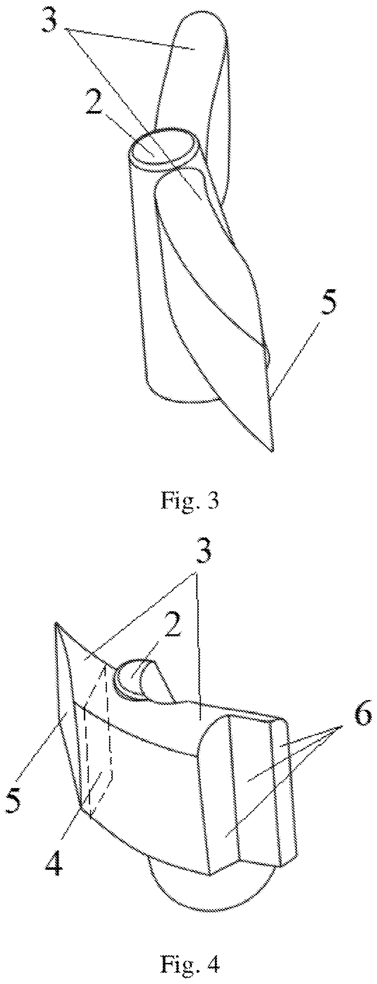

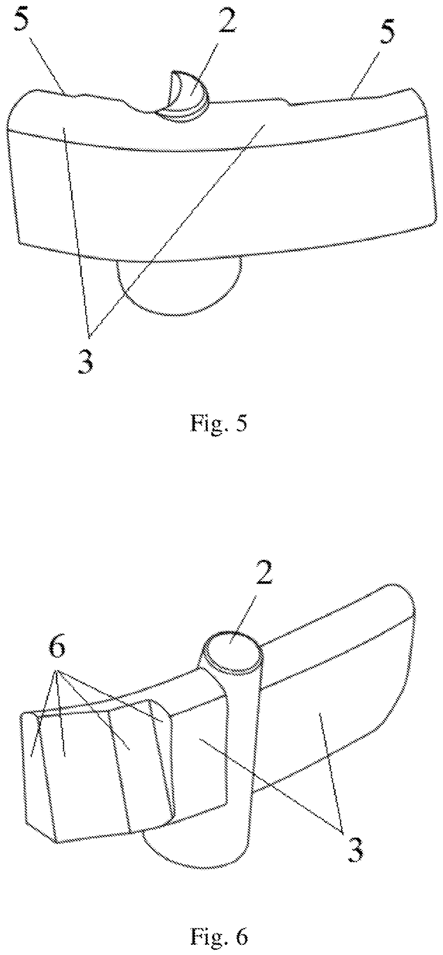

Fig. 3-6 illustrate general views of the bar elements 1 of Fig. 1 and 2. Said figures show that the adjacent surfaces of the side sections 3 of the bar elements 1 do not lie in the plane 4 (shown in dotted line in Fig. 4) of an imaginary cross-section of the side sections 3. In particular, the figures show the adjacent surfaces 5 of the side sections 3 and the surfaces 6 of the side sections 3. The surfaces 5 are formed by cutting the bar blank between the two sections 2 of attachment to the implant obliquely, while the surfaces 6 of the side sections 3 are formed by providing a Z-shaped cut of the blank in the respective sections. This is most clearly seen in Fig. 4. It is obvious that the adjacent surfaces of the side sections shown in the figures are given as an example, and any options of adjacent surfaces can be implemented (for example, all cuts are oblique, or all cuts are Z-shaped, or some of the cuts are oblique, and some are Z-shaped, or the cuts are made in any other way different from the embodiment, where the adjacent surfaces will lie completely in the planes of the cross section of the bar).

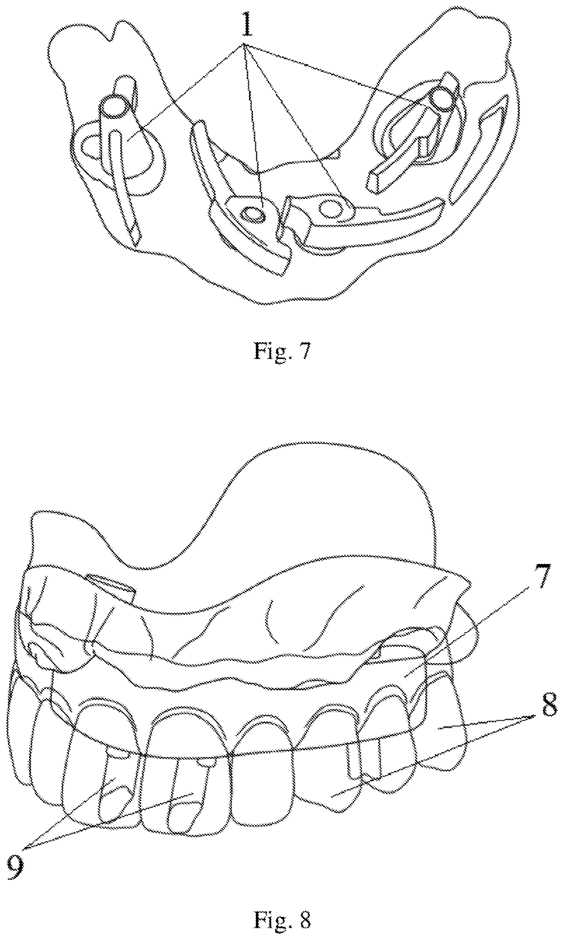

Fig. 7 illustrates a top view of an example of the bar elements 1 installed on multi-units before welding. This figure is an example of the elements, which is different from the example of Fig. 1-6, since said figure shows that the first and second elements on the left are characterized by the presence of Z-shaped adjacent surfaces of the side sections.

Fig. 8 illustrates a general view of the manufactured prosthesis, which comprises a bar 7 and teeth 8 installed on it (shown transparent for clarity), for example, using auto-polymer resin or composite cement. Reference number 9 indicates the grooves of the screws for accessing the implant multi-units.

The method for manufacturing a temporary dental prosthesis on implants for a patient with the complete absence of jaw teeth, according to one of the most preferred embodiments which, however, is not part of the claimed invention, is performed as follows.

First, three-dimensional scanning data and x-ray data are obtained from at least a portion of the patient's oral cavity. Afterwards, said data are matched with each other to obtain a three-dimensional model of the patient's dento-facial system.

A model of teeth is obtained by virtual modelling of teeth using the three-dimensional model of the patient's dento-facial system, after which, by virtual modelling of implant placement in the jawbone using the three-dimensional model of the patient's dento-facial system and the model of teeth, a model of implant placement and, accordingly, a model of surgical navigation template are obtained.

Afterwards, by virtual bar modelling using the three-dimensional model of the patient's dento-facial system, the model of implant placement and the model of teeth, a bar model is obtained, after which virtual modelling of division sections of the bar into elements 1 is performed.

The surgical navigation template, teeth and the bar blank are manufactured on a 3D-printer or on a milling machine before surgery using appropriate models. Bar elements 1 are manufactured by dividing the previously manufactured bar blank into modeled division sections.

After manufacturing all the necessary elements for carrying out an implantation operation and obtaining a dental prosthesis, implants are installed in the patient's jawbone by means of a navigation template, providing each of them with a multi-unit.

Each bar element 1 is installed by means of the sections 2 of attachment to the implant on the corresponding implant multi-units in the patient's jawbone, as shown in Fig. 8.

After installing all the elements 1 the side sections 3 of said bar elements 1 are connected along the adjacent surfaces 5 and 6 by intraoral welding to obtain a one-piece bar 7, and teeth 8 are installed on said bar 7 to obtain a temporary dental prosthesis.

It should be noted that the bar can be installed on the implants by means of the multi-units, as described above in the preferred embodiment of the claimed method, or it can be directly installed on the implants, i.e. without the use of "transition elements".

Thus, a method for manufacturing bar elements of a temporary dental prosthesis and a method for manufacturing a temporary dental prosthesis itself, ensuring the achievement of the technical result, which consists in minimizing the human resources required for the manufacture of the prosthesis, as well as the time of its manufacture and installation, are developed.

## Claims

1. A method for manufacturing bar elements (1) of a temporary dental prosthesis, each of which comprises a section (2) of attachment to the implant and at least one side section (3) extending from the section (2) of attachment, comprising the steps of
obtaining three-dimensional scanning data and x-ray data of at least a part of the oral cavity of the patient;
obtaining a three-dimensional model of the patient's dento-facial system by virtual matching of three-dimensional scanning data with x-ray data;
obtaining a model of teeth and a model of implant placement by virtual modelling of teeth and virtual modelling of implant placement in the jawbone using the three-dimensional model of the patient's dento-facial system;
obtaining a bar model by virtual bar modelling using the three-dimensional model of the patient's dento-facial system, the model of implant placement and the model of teeth;
obtaining bar elements (1) using the obtained bar model;
wherein the at least one side section (3) extending from the section (2) of attachment is intended for welding to the adjacent side section (3) of an adjacent element (1).

2. The method according to claim 1, wherein at the step of obtaining bar elements (1) of the dental prosthesis, adjacent surfaces (5,6) of the side sections (3) are provided which at least partially do not lie in the plane (4) of their imaginary cross section.

3. The method according to claim 1, wherein at the step of obtaining bar elements (1), a bar blank is manufactured using the obtained bar model, and the bar blank is divided into elements (1).

4. The method according to claim 3, wherein virtual modelling of division sections is performed before dividing the bar blank into elements (1).

5. The method according to claim 1, wherein virtual modelling of bar elements (1) using the obtained bar model and obtaining each of bar elements (1) separately using the models of bar elements (1) are performed at the step of obtaining bar elements (1).

## Patentansprüche

1. Verfahren zur Herstellung von Steg-Elementen (1) einer provisorischen Zahnprothese, wobei jedes der Steg-Elemente ein Implantat-Anschlussteil (2) und mindestens ein sich vom Anschlussteil (2) erstreckendes Seitenteil (3) umfasst, wobei das Verfahren die folgenden Schritte umfasst:
Erfassen von dreidimensionalen Scandaten und Röntgendaten mindestens eines Teils der Mundhöhle des Patienten;
Erstellen eines dreidimensionalen Modells des dentofazialen Systems des Patienten durch das virtuelle Abgleichen der dreidimensionalen Scandaten mit den Röntgendaten;
Erstellen eines Modells der Zähne und eines Modells der Implantatpositionierung durch das virtuelle Modellieren der Zähne und das virtuelle Modellieren der Implantatpositionierung im Kieferknochen unter Verwendung des dreidimensionalen Modells des dentofazialen Systems des Patienten;
Erstellen eines Steg-Modells durch virtuelles Steg-Modellieren unter Verwendung des dreidimensionalen Modells des dentofazialen Systems des Patienten, des Modells der Implantatpositionierung und des Modells der Zähne;
Herstellen von Steg-Elementen (1) unter Verwendung des erstellten Steg-Modells;
wobei das mindestens ein Seitenteil (3), das sich vom Anschlussteil (2) erstreckt, zum Verschweißen mit dem benachbarten Seitenteil (3) eines benachbarten Elementes (1) bestimmt ist.

2. Verfahren nach Anspruch 1, wobei beim Schritt des Herstellens der Steg-Elemente (1) der Zahnprothese benachbarte Flächen (5,6) der Seitenteile (3) vorgesehen werden, die mindestens teilweise nicht in der Ebene (4) ihres gedachten Querschnitts liegen.

3. Verfahren nach Anspruch 1, wobei beim Schritt des Herstellens der Steg-Elemente (1) ein Steg-Rohling unter Verwendung des erstellten Steg-Modells hergestellt wird und der Steg-Rohling in Elemente (1) unterteilt wird.

4. Verfahren nach Anspruch 3, wobei virtuelles Modellieren von Trennabschnitten vor dem Unterteilen des Steg-Rohlings in Elemente (1) durchgeführt wird.

5. Verfahren nach Anspruch 1, wobei das virtuelle Modellieren der Steg-Elemente (1) unter Verwendung des erstellten Steg-Modells und das einzelne Herstellen jedes der Steg-Elemente (1) unter Verwendung der Modelle der Steg-Elemente (1) beim Schritt des Herstellens der Steg-Elemente (1) durchgeführt werden.

## Revendications

1. Procédé de fabrication d'éléments (1) de barre pour prothèse dentaire temporaire, chacun comprenant une section (2) de fixation à l'implant et au moins une section (3) latérale s'étendant depuis la section (2) de fixation, comprenant les étapes:
d'obtention des données de numérisation tridimensionnelles et des données radiographiques d'au moins une partie de la cavité buccale du patient;
d'obtention d'un modèle tridimensionnel du système dento-facial du patient par mise en correspondance virtuelle des données de numérisation tridimensionnelles et des données radiographiques;
d'obtention d'un modèle de dents et d'un modèle de placement d'implant par modélisation virtuelle des dents et du placement d'implant dans la mâchoire à l'aide du modèle tridimensionnel du système dento-facial du patient;
d'obtention d'un modèle de barre par modélisation virtuelle de barre à l'aide du modèle tridimensionnel du système dento-facial du patient, du modèle de placement d'implant et du modèle de dents;
d'obtention des éléments (1) de barre à l'aide du modèle de barre obtenu;
dans lequel au moins une des sections (3) latérales s'étendant à partir de la section (2) de fixation est destinée à être soudée à la section latérale (3) adjacente d'un élément (1) adjacent.

2. Le procédé selon la revendication 1, dans lequel, à l'étape d'obtention des éléments (1) de barre de la prothèse dentaire, des surfaces (5, 6) adjacentes des sections (3) latérales sont prévues qui au moins partiellement ne se trouvent pas dans le plan (4) de leur section transversale imaginaire.

3. Le procédé selon la revendication 1, dans lequel, à l'étape d'obtention d'éléments (1) de barre, une ébauche de barre est fabriquée à l'aide du modèle de barre obtenu, et l'ébauche de barre est divisée en éléments (1).

4. Le procédé selon la revendication 3, dans lequel une modélisation virtuelle des sections de division est effectuée avant de diviser l'ébauche de barre en éléments (1).

5. Le procédé selon la revendication 1, dans lequel la modélisation virtuelle des éléments (1) de barre à l'aide du modèle de barre obtenu et l'obtention de chacun des éléments (1) de barre séparément à l'aide des modèles d'éléments (1) de barre sont effectuées à l'étape d'obtention des éléments (1) de barre.
